# EUROPÄISCHE PATENTSCHRIFT

(11) **EP 4 296 688 B1**
(45) Veröffentlichungstag und Bekanntmachung des Hinweises auf die Patenterteilung: **05.08.2026**
(21) Anmeldenummer: 23179265.6
(22) Anmeldetag: 14.06.2023
(51) Int. Cl.: G01P 5/02, G01P 13/02

(54) **BESTIMMUNG DER WINDRICHTUNG BEI EINEM SCHIFF MIT WENIGSTENS ZWEI ANEMOMETERN**
DETERMINING THE WIND DIRECTION IN A SHIP HAVING AT LEAST TWO ANEMOMETERS
DÉTERMINATION DE LA DIRECTION DU VENT DANS UN NAVIRE COMPRENANT AU MOINS DEUX ANÉMOMÈTRES

(30) Priorität: 20.06.2022 DE 102022206115
(43) Veröffentlichungstag der Anmeldung: 27.12.2023
(73) Patentinhaber: TKMS GmbH, 24143 Kiel (DE); thyssenkrupp AG, 45143 Essen (DE)
(72) Erfinder: Thieme, Christian, 19258 Nieklitz (DE)
(74) Vertreter: thyssenkrupp Intellectual Property GmbH

(56) Entgegenhaltungen:
- CN-B- 109 917 151
- THORNHILL ERIC ET AL: "Ship anemometer bias management", OCEAN ENGINEERING, PERGAMON, AMSTERDAM, NL, vol. 216, 14 September 2020 (2020-09-14), XP086390766, ISSN: 0029-8018, [retrieved on 20200914], DOI: 10.1016/J.OCEANENG.2020.107843

## Beschreibung

Die Erfindung betrifft ein Verfahren zur Bestimmung der Windrichtung bei einem Schiff mit wenigstens zwei Anemometern.

Die optimale Position für ein Anemometer auf einem Schiff ist die höchste Position, da hier der Wind am ungestörtesten ist. Dieses kann beispielsweise bei einem Segelschiff auf der Spitze des Mastes sein. Bei vielen Schiffen ist diese Position jedoch für andere Vorrichtungen, beispielsweise Kommunikationsantennen vorgesehen. Daher werden dann beispielsweise zwei Anemometer vorgesehen, eines auf der Backbordseite und eines auf der Steuerbordseite. Durch diese Anordnung und dadurch, dass nun Aufbauten zwischen den Anemometern sind, kann der Wind nicht mehr ungehindert erfasst werden. Unter bestimmten Bedingungen kann eines der Anemometer durch die Aufbauten abgeschattet werden und liegt dadurch dann im Windschatten der Aufbauten. Um dieses Problem zu lösen wird als einfache Lösung darauf zurückgegriffen, dass für Windrichtung und Windgeschwindigkeit jeweils das Anemometer ausgewählt wird, welches den schnelleren Wind, also die höhere Windgeschwindigkeit, erfasst.

Diese einfache Lösung führt aber zu zwei Problemen. Zum einen ist die Luftströmung auf der Leeseite im Windschatten der Aufbauten oftmals chaotisch. Es kann daher auch dazu kommen, dass dort die höhere Windgeschwindigkeit erfasst wird. Im Extremfall kann diese sogar der echten Windrichtung entgegengesetzt sein. Zum anderen tritt aber auch bei direkter Fahrt gegen den Wind ein Problem auf. In diesem Fall wäre die theoretische Windrichtung 0 °. Durch die Aufbauten wird der Wind aber herumgeführt, sodass das an Steuerbord angeordnete Anemometer beispielsweise einen Winkel von 5 ° aus Backbord erfasst, während das an Backbord angeordnete Anemometer beispielsweise einen Winkel von 5 ° aus Steuerbord erfasst. Da beide Anemometer in erster Näherung die gleiche Windgeschwindigkeit erfassen, wird im statistischen Mittel mal das eine und mal das andere Anemometer eine höhere Windgeschwindigkeit erfassen. Dadurch würde die Windrichtung immer zwischen + 5 ° und - 5 ° springen, also um insgesamt 10 °.

Es gibt jedoch Anwendungen, bei denen eine genaue Kenntnis der Windrichtung und vorzugsweise auch der exakten Windgeschwindigkeit wünschenswert wäre. Beispielsweise können Gegenmaßnahmen gegen anfliegende Effektoren stark windabhängig sein. Bei falscher Kenntnis kann daher die Wirkung der Gegenmaßnahme verfehlt werden oder im schlimmsten Fall die Detektierbarkeit des Schiffes für den Effektor noch vereinfachen.

Aus Thornhill, E. et al.: Ship anemometer bias management. In: Ocean Engineering, Vol. 216, 2020, S. 1-14. - DOI 10.1016/j.oceaneng.2020.107843 sind Probleme bei Verwendung von Anemometers auf Schiffen bekannt. In Kapitel 7.2 wird darauf verwiesen, dass bei der Verwendung von nur zwei Anemometern es einen verwendbaren Bereich und einen unzuverlässigen Bereich gibt, es wird aber nicht gezeigt, wie man ohne Kenntnis der Windrichtung entscheidet, welches Sensor den im verwendbaren Bereich und welcher um unzuverlässigen Bereich liegt.

Aus der CN 1 09 917 151 A ist ein Algorithmus für die Kombination des relativen Windes eines Schiffes auf der Grundlage einer dynamischen Gewichtsverteilung bekannt.

Aufgabe der Erfindung ist es, aus den Werten wenigstens zweier Anemometer eine möglichst zuverlässige Aussage über die realen Windverhältnisse zu treffen und zwar nur aus den Daten der beiden Anemometer und ohne weitere Kenntnisse und hierbei bei jeder Windrichtung zu einem richtigen und optimalen Ergebnis der aus den Daten der beiden Anemometer bestimmten Windrichtung zu kommen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Ermittlung der Windrichtung an Bord eines Schiffes mit wenigstens einem ersten Anemometer und einem zweiten Anemometer. Es werden also genau zwei Anemometer verwendet und nicht beispielswiese drei oder mehr. Weiter werden auch keine anderen Messvorrichtungen verwendet oder Daten, die die ungefähre Windrichtung vorgeben. Das erfindungsgemäße Verfahren kann ausschließlich aus den Daten des ersten Anemometers und des zweiten Anemometers die Windrichtung ermitteln. Die Anemometer können beispielsweise an der Rahnock, jeweils eines an Backbord, das andere an Steuerbord angeordnet sein. Durch den seitlich Versatz durch die Anordnung auf einer Nock wird ein Abstand zu den Aufbauten des Schiffes erreicht, um so den Bereich des Einflusses des Aufbaus auf die Anemometer zu verringern. Alternativ oder zusätzlich ist es auch denkbar, ein Anemometer am Bug und eines am Heck anzuordnen. Das Schiff weist eine Auswertevorrichtung auf. Die Auswertevorrichtung ist mit dem ersten Anemometer und dem zweiten Anemometer zur Übertragung der gemessenen Windrichtung verbunden. Hierbei kann die Auswertevorrichtung entweder die Anemometer direkt abfragen oder die Anemometer senden die Daten vorzugsweise zyklisch automatisch an die Auswertevorrichtung. Die Auswertevorrichtung kann vorzugsweise in die Schiffssysteme integriert sein, es muss sich also nicht um eine eigenständige Hardware handeln, sondern kann auch im Schiffssystem als Software integriert sein. Die Auswertevorrichtung kann ein Display zur Anzeige aufweisen, kann die ermittelte Windrichtung und gegebenenfalls Windgeschwindigkeit auch elektronisch an weitere Schiffssysteme übermitteln.

Das Verfahren weist die folgenden Schritte auf:
a) Kontinuierliches Erfassen der Windrichtung und der Windgeschwindigkeit durch das erste Anemometer und das zweite Anemometer und Übertragung der ersten erfassten Windrichtung und der ersten erfassten Windgeschwindigkeit des ersten Anemometers und der zweiten erfassten Windrichtung und der zweiten erfassten Windgeschwindigkeit des zweiten Anemometers an die Auswertevorrichtung,
b) Bilden eines Mittelwertes der erfassten Windgeschwindigkeiten über einen ersten Zeitraum t₁ sowie Bilden eines Abweichungswertes für den Mittelwert, Beispielsweise und bevorzugt kann dieses erfolgen durch Bilden eines ersten ersten Mittelwertes der ersten erfassten Windgeschwindigkeiten über einen ersten Zeitraum t₁ sowie Bilden eines ersten ersten Abweichungswertes für den ersten ersten Mittelwert sowie
   Bilden eines zweiten ersten Mittelwertes der zweiten erfassten Windgeschwindigkeiten über einen ersten Zeitraum t₁ sowie Bilden eines zweiten ersten Abweichungswertes für den zweiten ersten Mittelwert,
c) Vergleich des Abweichungswertes mit einem ersten Schwellwert (100) zur Unterscheidung von zwei Fällen: Beispielsweise und bevorzugt kann dieses erfolgen durch Vergleich des ersten ersten Abweichungswertes und des zweiten ersten Abweichungswertes mit einem ersten Schwellwert zur Unterscheidung von zwei Fällen:
   Fall 1: Abweichungswert liegt unter dem ersten Schwellwert (100),
   Fall 2. Der Abweichungswert liegt über dem ersten Schwellwert (100) Beispielweise und bevorzugt können diese beiden Fälle weiter ausgeführt sein als: Fall 1: der erste erste Abweichungswert und der zweite erste Abweichungswert liegen unter dem ersten Schwellwert,
   Fall 2. Einer der beiden ersten Abweichungswerte liegt unter dem ersten Schwellwert, der andere der beiden ersten Abweichungswerte liegt über dem ersten Schwellwert.

Wesentlich ist somit, dass im ersten Fall beide Anemometer zuverlässig angeströmt werden, also der Abweichungswert (resultierend aus der Schwankung der Messwerte) für beide Anemometer gering ist. Im ersten Fall können somit beide Anemometer als zuverlässig angesehen und verwendet werden.

Der zweite Fall ist gegeben, wenn eines der Anemometer nicht sauber angeströmt wird, sondern beispielswiese im Windschatten ist. Dadurch treten schnelle Veränderungen auf, sodass der Abweichungswert entsprechend hoch ist, da keine konstante Anströmung erfolgt. Hierdurch ist eben nicht nur erkennbar, dass eines der Anemometer im Windschatten ist, sondern auch welches eben nicht im Windschatten ist und damit zuverlässige Messdaten liefert, sodass im zweiten Fall eben nur die Daten des zuverlässig vom Wind angeströmten Anemometers verwendet werden.

Das kontinuierliche Erfassung und/oder Übertragen in Schritt a) kann auch beispielsweise und bevorzugt getaktet erfolgen. Wesentlich ist, dass auch über kurze Zeiträume, insbesondere im Bereich von 1 bis 10 Sekunden mehrere Messwerte vorliegen, um einen Mittelwert und auch die Streuung um den Mittelwert, vorzugsweise in Form eines statistischen Streuungsmaßes, insbesondere einer Varianz, bestimmen zu können.

Die ersten n-ten Werte stammen jeweils von dem ersten Anemometer oder sind aus Werten des ersten Anemometers errechnet, die zweiten n-ten Werte stammen jeweils von dem zweiten Anemometer oder sind aus Werten des zweiten Anemometers errechnet.

Die Übertragung in Schritt a) kann analog, beispielsweise als Spannungspegel oder digital erfolgen. Für die Windrichtung ist sogar eine mechanische Übertragung möglich, wobei die Auswertevorrichtung beispielsweise und vorzugsweise einen Winkelsensor zur Digitalisierung der Information der Windrichtung aufweist.

Die Schritte b) und c) dienen dazu, um festzustellen, ob sich eines der Anemometer auf der Luvseite, also der windzugewandten Seite, und das andere Anemometer auf der Leeseite, also der windabgewandten Seite, befindet und insbesondere ob das Anemometer auf der Leeseite in einem durch Aufbauten abgeschatteten Bereich angeordnet ist.

Der Schwellwert kann hierbei entweder theoretisch festgelegt werden, beispielsweise aus Simulationsergebnissen. Ebenso kann der Schwellwert auch während der Fahrt, insbesondere während der Erprobungsfahrten empirisch ermittelt und festgelegt werden.

Erfindungswesentlich ist, dass genau zwei Anemometer verwendet werden und die Informationen aus zwei Anemometern auch ausreicht, um die Windrichtung zuverlässig zu bestimmen. Aus dem Stand der Technik, zum Beispiel der CN 1 09 917 151 A ist die Verwendung von drei Anemometern bekannt. Dann stimmen zwei überein, sodass die Windrichtung einfach zu ermitteln ist.

Erfindungsgemäß weist das Verfahren zusätzlich den folgenden Schritt auf:
d) Ermitteln der Windrichtung und/oder Windgeschwindigkeit aus der ersten erfassten Windrichtung und/oder der ersten erfassten Windgeschwindigkeit und der zweiten erfassten Windrichtung und /oder der zweiten erfassten Windgeschwindigkeit und weiteres Vorgehen nach einem der beiden Fälle:
   Fall 1: durch Verwenden der ersten erfassten Windrichtung und/oder der ersten erfassten Windgeschwindigkeit und der zweiten erfassten Windrichtung, und/oder der ersten erfassten Windgeschwindigkeit
Fall 2: Verwenden der erfassten Windrichtung und/oder der erfassten Windgeschwindigkeit des Anemometers (20, 30), dessen Abweichungswert (110, 120) den ersten Schwellwert (100) unterschreitet
durch Verwenden der ersten erfassten Windrichtung und/oder der ersten erfassten Windgeschwindigkeit bedeutet, dass die so ermittelten Werte verwendet werden, beispielsweise für die Navigation oder jede andere Anwendung, bei der die Kenntnis des Windes notwendig oder vorteilhaft ist.

Im Fall 1 kann die erste erfasste Windrichtung und der zweiten erfassten Windrichtung insbesondere durch Mittelung zu einer gemittelten Windrichtung zusammengefasst und verwendet werden. Alternativ oder zusätzlich werden die erste erfasste Windgeschwindigkeit, und die zweite erfasste Windgeschwindigkeit insbesondere durch Mittelung zu einer gemittelten Windrichtung zusammengefasst und verwendet.

Erfindungsgemäß wird der Mittelwert in Schritt b) als ein gemeinsamer Mittelwert über die ersten erfassten Windgeschwindigkeiten und die zweiten erfassten Windgeschwindigkeiten gebildet wird und der Abweichungswert in Schritt b) als ein gemeinsamer Abweichungswert der ersten erfassten Windgeschwindigkeiten und der zweiten erfassten Windgeschwindigkeiten gegenüber dem gemeinsamen Mittelwert gebildet,
wobei in Schritt c) folgende Schritt durchgeführt werden:
Vergleich des gemeinsamen Abweichungswertes mit einem ersten Schwellwert zur Unterscheidung von zwei Fällen:
Fall 1: der gemeinsame Abweichungswert liegt unter dem ersten Schwellwert,
Fall 2. der gemeinsame Abweichungswert liegt über dem ersten Schwellwert.

Im Fall 1 werden beide Anemometer vom Wind angeströmt, beide Anemometer liefern somit vernünftige Messwerte. Im Fall 2 ist erkennbar, dass ein Anemometer auf der Leeseite, also der windabgewandten Seite, befindet, insbesondere, dass das Anemometer auf der Leeseite in einem durch Aufbauten abgeschatteten Bereich angeordnet ist. Damit ist noch nicht unmittelbar erkennbar, welches der beiden Anemometer auf der Luvseite und welches auf der Leeseite angeordnet ist. Die Auswahl kann beispielsweise aus der in der Vergangenheit ermittelten Windrichtung und/oder den gemessenen Windrichtungen der Anemometer abgeschätzt werden. Alternativ oder zusätzlich können auch weitere im Folgenden beschriebene Schritte zur Unterscheidung verwendet werden.

Erfindungsgemäß erfolgt in Schritt b) das Bilden eines ersten ersten Mittelwertes der ersten erfassten Windgeschwindigkeiten über einen ersten Zeitraum t1 sowie Bilden eines ersten ersten Abweichungswertes (110) für den ersten ersten Mittelwert sowie das Bilden eines zweiten ersten Mittelwertes der zweiten erfassten Windgeschwindigkeiten über einen ersten Zeitraum t1 sowie Bilden eines zweiten ersten Abweichungswertes (120) für den zweiten ersten Mittelwert,
wobei in Schritt c) folgende Schritt durchgeführt werden:
Vergleich des ersten ersten Abweichungswertes und des zweiten ersten Abweichungswertes mit einem ersten Schwellwert zur Unterscheidung von zwei Fällen: Fall 1: der erste erste Abweichungswert und der zweite erste Abweichungswert liegen unter dem ersten Schwellwert,
Fall 2. Einer der beiden ersten Abweichungswerte liegt unter dem ersten Schwellwert, der andere der beiden ersten Abweichungswerte liegt über dem ersten Schwellwert.

In Schritt b) erfolgt die Mittelwertbildung entweder für jeweils aufeinander folgende Intervalle. Beispielsweise werden alle ersten erfassten Windgeschwindigkeiten innerhalb eines Intervalls von rein beispielhaft 5 Sekunden (von 0 bis 5) gemittelt und anschließend die nächsten 5 Sekunden (von 5 bis 10) und so weiter. Alternativ könnte ein gleitender Mittelwert gebildet werden, rein beispielhaft über ebenfalls 5 Sekunden, also zur Zeit 5 Sekunden von 0 bis 5, zur Zeit 6 Sekunden von 1 bis 6, zur Zeit 7 Sekunden von 2 bis 7 und so weiter. Zu jedem Mittelwert wird ein Abweichungswert bestimmt. Vorzugsweise handelt es sich bei dem Abweichungswert um ein statistisches Streuungsmaß, insbesondere um die empirische Standardabweichung, die Spannweite oder die Varianz, ganz besonders bevorzugt um die Varianz (auch mittleres Abweichungsquadrat).

Im Fall 1 liegen sowohl der erste erste Abweichungswert als auch der zweite erste Abweichungswert liegen unter dem ersten Schwellwert. Somit werden sowohl das erste Anemometer als auch das zweite Anemometer zuverlässig angeströmt, keines liegt im Windschatten der Aufbauten. Daher können und sollen bei im Schritt d) zur Ermittlung der Windrichtung herangezogen werden. Hierdurch kann beispielsweise bei einer Anordnung an Backbord und Steuerbord und einer Anströmung exakt in Fahrtrichtung und einer dadurch durch die Aufbauten leicht veränderten Anströmrichtung ein "Springen" der Windrichtung zwischen der an dem ersten Anemometer gemessenen ersten erfassten Windrichtung und der am zweiten Anemometer gemessenen zweiten erfassten Windrichtung vermieden werden. Durch die Mittelung hebt sich dieser Effekt auf, sodass die korrekte Windrichtung ermittelt werden kann und diese auch konstant bleibt ohne zu springen.

Im Fall 2 kann das Anemometer, bei welchem der erste Abweichungswert liegt über dem ersten Schwellwert liegt, als auf der Leeseite und in der Abschattung der Aufbauten erkannt werden. Dieser wird somit unabhängig davon, ob die an diesem Anemometer gemessene erfasste Windgeschwindigkeit größer oder kleiner als an dem anderen Anemometer ist. Es wird lediglich ausgenutzt, dass im Bereich des Windschattens die Zustände deutlich veränderlicher (chaotischer) sind. Somit wird im Fall 2 dann das auf der Leeseite und im Windschatten befindliche Anemometer für die weitere Auswertung ignoriert und lediglich das auf der Luvseite angeordnete Anemometer für die weitere Betrachtung ehrangezogen.

Vorteil dieser Ausführungsform ist somit, dass mit einem minimalen zusätzlichen mathematischen Aufwand das Anemometer auf der Luvseite und das Anemometer auf der Leeseite schnell und einfach zugeordnet werden können.

In einer weiteren Ausführungsform der Erfindung der Mittelwert in Schritt b) als ein gemeinsamer Mittelwert über die ersten erfassten Windgeschwindigkeiten und die zweiten erfassten Windgeschwindigkeiten gebildet wird und Schritt b) ein erster dritter Abweichungswert der ersten erfassten Windgeschwindigkeiten gegenüber dem gemeinsamen Mittelwert und ein zweiter dritter Abweichungswert der zweiten erfassten Windgeschwindigkeiten gegenüber dem gemeinsamen Mittelwert gebildet wird, wobei in Schritt c) folgende Schritt durchgeführt werden:
Vergleich des ersten dritten Abweichungswertes und des zweiten dritten Abweichungswertes mit einem ersten Schwellwert zur Unterscheidung von zwei Fällen:
Fall 1: der erste dritte Abweichungswert und der zweite dritte Abweichungswert liegen unter dem ersten Schwellwert,
Fall 2. Einer der beiden dritten Abweichungswerte liegt unter dem ersten Schwellwert, der andere der beiden dritten Abweichungswerte liegt über dem ersten Schwellwert.

Diese Ausführungsform stellt einen Mittelweg aus den beiden zuvor genannten Ausführungsformen dar.

In einer weiteren Ausführungsform der Erfindung wird der ersten Zeitraum t₁ zwischen 1 s und 10 s, bevorzugt zwischen 2 s und 5 s, gewählt. Dieser Zeitraum hat sich als ausreichend lang genug erwiesen, um bei den üblichen Abtastraten der Anemometer ausreichend einzelne Messwerte zu haben und gelichzeitig das Zeitintervall kurz zu halten, um beispielsweise schnell eine Windänderung bei entweder Veränderung der Windrichtung oder bei Kurvenfahrt zu erhalten.

In einer weiteren Ausführungsform der Erfindung erfolgt das kontinuierliche Erfassen mit einer Zeitauflösung von 0,1 ms bis 1000 ms, bevorzugt zwischen 100 ms und 500 ms. Hierdurch wird eine Optimierung erreicht, um auf der einen Seite eine zuverlässige Einzelmessung mit möglichst geringer statistischer Streuung (bei konstanter Anströmung) zu erreichen, auf der anderen Seite eine ausreichend hohe Datenmenge zu erzeugen, um in einem sinnvollen Zeitraum t₁ aussagekräftige Abweichungswerte zu erhalten.

In einer weiteren Ausführungsform der Erfindung wird der erste Schwellwert auf 10 m²/s² festgelegt.

In einer weiteren Ausführungsform der Erfindung wird der erste Schwellwert in Abhängigkeit von der Windgeschwindigkeit v_{Wind} in (m/s) auf (a + b v_{Wind} + c (v_{Wind})² ) m²/s² festgelegt, wobei a zwischen 1 und 7,5, bevorzugt zwischen 2,5 und 5, b zwischen 0,25 und 3, bevorzugt zwischen 0,5 und 1,5, und c zwischen 0,01 und 1, bevorzugt zwischen 0,05 und 0,2, festgelegt wird. Hierbei kann für v_{Wind} beispielsweise der letzte gemessene Wert verwendet werden. Alternativ kann die höchste aktuelle erfasste Windgeschwindigkeit verwendet werden. Eine beispielhafte und bevorzugte Auführungsform ist für a = 3,3333, b = 0,7775 und c = 0,1008 gegeben, sodass such der erste Schwellwert zu (3,3333 + 0,7775 v_{Wind} + 0,1008 (v_{Wind})² ) m²/s² ergibt.

In einer weiteren Ausführungsform der Erfindung wird als erster Abweichungswert die Varianz verwendet.

Erfindungsgemäß ist das Verfahren zusätzlich zur Ermittlung der Windgeschwindigkeit ausgebildet. Daher weist das Verfahren zusätzlich die folgenden Schritte auf:
A) Bilden eines ersten zweiten Mittelwertes der ersten erfassten Windgeschwindigkeiten über einen zweiten Zeitraum t₂ sowie Bilden eines ersten zweiten Abweichungswertes für den ersten zweiten Mittelwert sowie Bilden eines zweiten zweiten Mittelwertes der zweiten erfassten Windgeschwindigkeiten über einen zweiten Zeitraum t₂ sowie Bilden eines zweiten zweiten Abweichungswertes für den zweiten Mittelwert,
B) Vergleichen des ersten zweiten Abweichungswertes und des zweiten zweiten Abweichungswertes miteinander zur Unterscheidung von zwei Fällen:
   Fall I: Einer der zweiten Abweichungswerte ist um wenigstens Faktor 10 größer als der andere zweite Abweichungswert,
   Fall II: Keiner der zweiten Abweichungswerte ist wenigstens Faktor 10 größer als der andere zweite Abweichung,
C) Ermitteln der Windgeschwindigkeit:
   Fall I: Verwenden der erfassten Windgeschwindigkeiten nur des Anemometers, welches den geringeren zweiten Abweichungswert aufweist,
   Fall II: Verwenden der erfassten Windgeschwindigkeiten beider Anemometer.

Diese Unterscheidung zum ersten Teil des Verfahrens ist sinnvoll, da es zwischen dem einen Bereich, in dem beide Anemometer relativ sauber angeströmt werden und entsprechend beide gute Werte liefern und einem zweitem Bereich, in dem das leeseitige Anemometer im Tot- und Rezirkulationsbereich hinter den Aufbauten liegt und somit weder Windrichtung noch Windgeschwindigkeit korrekt erfasst, einen weiteren Übergangsbereich, in dem das leeseitige Anemometer zwar eine grob richtige Richtung, aber eine zumeist überhöhte Windgeschwindigkeit erfasst. Es geht also darum, bei der Bestimmung der Windrichtung nur den zweiten Bereich auszuschließen, bei der Bestimmung der Windgeschwindigkeit den zweiten Bereich und den Übergangsbereich auszuschließen. Um den Übergangsbereich besser identifizieren zu können ist der Vergleich der Abweichungswerte miteinander besser geeignet als der Vergleich der Abweichungswerte mit einem Schwellwert.

Bevorzugt ist der zweite Zeitraum t₂ größer als der erste Zeitraum t₁. Durch einen längeren Zeitraum werden die Abweichungen insgesamt geringer. Dadurch tritt der Unterschied im direkten Vergleich im Gegensatz zum Vergleich mit einem Schwellwert deutlicher hervor, wohingegen beim Vergleich mit einem Schwellwert ein zu lang gewählter Zeitraum eher nachteilig ist.

In einer weiteren Ausführungsform der Erfindung wird der zweite Zeitraum t₂ zwischen 10 s und 120 s, bevorzugt zwischen 20 s und 50 s, gewählt.

In einer weiteren Ausführungsform der Erfindung wird in Schritt C) im Fall II die Windgeschwindigkeit durch Mittelung der beiden erfassten Windgeschwindigkeiten ermittelt. Im Fall II werden beide Anemometer vom Wind angeströmt, daher können beide Messwerte verwendet werden. Hierdurch wird die Genauigkeit über die bisherige Variante der Auswahl nur der höheren Windgeschwindigkeit den Vorteil der höheren Genauigkeit.

In einer weiteren Ausführungsform der Erfindung wird in Schritt C) im Fall I die Windgeschwindigkeit aus der erfassten Windgeschwindigkeit des Anemometers mit der geringeren zweiten Abweichung ermittelt. Bevorzugt erfolgt hierbei zusätzlich eine Anpassung mittels einer Korrekturfunktion. Da die Veränderung der gemessenen Windgeschwindigkeit von der ungestörten Windgeschwindigkeit durch die Aufbauten erzeugt wird, besteht hier ein reproduzierbarer Zusammenhang.

Zur Bestimmung der Korrekturfunktion gibt es zwei alternative Varianten, welche aber auch miteinander kombiniert werden können.

In einer ersten Variante der Ausführungsform der Erfindung wird die Korrekturfunktion mittels Simulation für das jeweilige konkrete Schiff bei unterschiedlichen Windgeschwindigkeiten und Anströmwinkeln ermittelt. Hierzu ist es notwendig, ein möglichst gutes digitales Abbild der äußeren Struktur zu haben, um dann die Strömungsverhältnisse für verschiedene Anströmwinkel (verschiedene Windrichtungen) und Windgeschwindigkeiten zu simulieren. Aus diesen Simulationen lässt sich dann die exakte lokale Windgeschwindigkeit an dem luvseitigen Anemometer ermitteln und somit eine Korrektur Funktion in Abhängigkeit von Windrichtung und Windgeschwindigkeit ermitteln.

In einer zweiten Variante der Ausführungsform der Erfindung wird die Korrekturfunktion durch Fahren von Drehkreisen ermittelt. Bei einer stabilen Windlage fährt das Schiff einen oder bevorzugt mehrere Kreise. Dabei wird angenommen, dass Windrichtung und Windgeschwindigkeit sich während der Drehkreise sich nicht ändert. Werden diese Drehkreise insbesondere bei verschiedenen Windgeschwindigkeiten wiederholt, kann die Korrekturfunktion ohne eine Modellierung erhalten werden. Beispielsweise und bevorzugt werden die Drehkreise während der Erprobung des Schiffes gefahren.

In einem weiteren Aspekt betrifft die Erfindung eine Auswertevorrichtung, wobei die Auswertevorrichtung zur Durchführung des erfindungsgemäßen Verfahren ausgebildet ist. Mit einer solchen Auswertevorrichtung ist eine besonders einfache Nachrüstung für Schiffe möglich, da die wenigstens zwei Anemometer üblicherweise bereits vorhanden sind.

In einem weiteren Aspekt betrifft die Erfindung ein Schiff mit einer Auswertevorrichtung und wenigstens einem ersten Anemometer und einem zweiten Anemometer. Das Schiff ist zur Durchführung des erfindungsgemäßen Verfahren ausgebildet.

In einem weiteren Aspekt betrifft die Erfindung ein Computerprogrammprodukt mit ausführbaren Instruktionen zur Ausführung des erfindungsmäßen. Da die Auswertevorrichtung wie beschrieben auch softwareseitig in bestehende Schiffssysteme integriert werden kann, ist so eine besonders einfache Nachrüstung für bestehende Schiffe möglich.

Nachfolgend ist das erfindungsgemäße Verfahren anhand eines in den Zeichnungen dargestellten Ausführungsbeispiels näher erläutert.
- Fig. 1: Schiff in der Aufsicht
- Fig. 2: schematischer Verlauf

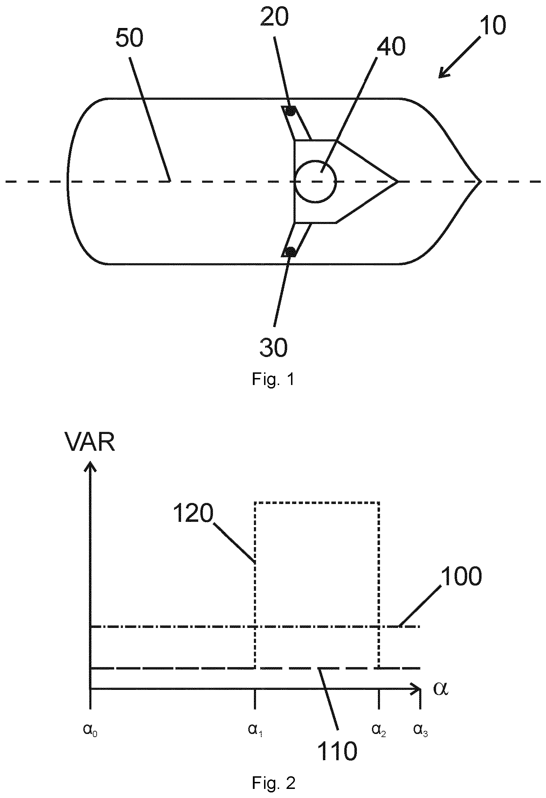

In Fig. 1 ist ein Schiff 10 in der schematischen Aufsicht gezeigt. Das Schiff weist einen Aufbau 40 auf mit zwei der Nock an Backbord beziehungsweise an der Nock auf Steuerbord angeordneten Anemometern (20, 30). Die Windanströmung an die Anemometer 20, 30 kann durch den Aufbau 40 beeinflusst werden, insbesondere wenn der Wind aus einer Richtung kommt, dass eines der Anemometer 20, 30 im Windschatten des Aufbaus 40 liegt. Das Schiff 10 weist eine Längsrichtung 50 auf. Im gezeigten Beispiel ist der Bug rechts, das Heck links. Das Schiff 10 würde somit nach rechts fahren.

Würde der Wind von vorne kommen, im gezeigten Beispiel also von der rechten Seite, exakt in Längsrichtung, so würde man dem Wind im Folgenden eine Windrichtung von 0 ° zuordnen. Bei einer Windrichtung von 180 ° würde der Wind somit direkt von hinten, auf der Darstellung von links, kommen. Bei 90 ° käme der Wind von Steuerbord (unten) und bei 270 ° von Backbord (oben). Somit wäre bei einem Wind vom Steuerbord das erste Anemometer 20 im Windschatten des Aufbaus 40 und bei Wind von Backbord das zweite Anemometer 30 im Windschatten des Aufbaus 40.

Betrachtet man grob vereinfacht und ohne jedes Signalrauschen die Abweichungswerte 110, 120 in Abhängigkeit von der Windrichtung α, so ergibt sich vereinfacht das in Fig. 2 gezeigte Bild. Zwischen α₀ und α₁ werden das erste Anemometer 20 und das zweite Anemometer 30 beide vergleichswiese gleich durch den Wind angeströmt, sodass der Abweichungswert 110, 120 für beide in etwa gleich groß ist. Bei dem Winkel α₁ gelangt im gezeigten Beispiel das zweite Anemometer 30 in den Windschatten des Aufbaus 40, sodass der zweite erste Abweichungswert 120 stark ansteigt und den ersten Schwellwert 100 übersteigt. Das erste Anemometer 20 wird weiter sauber angeströmt, der erste erste Abweichungswert 110 bleibt konstant. Bei dem Winkel α₂ kommt im gezeigten Beispiel das zweite Anemometer 30 aus dem Windschatten des Aufbaus 40 heraus, sodass der zweite erste Abweichungswert 120 sich wieder normalisiert und auf das Niveau des ersten Schwellwert 100 zurückgeht.

Somit ist im Bereich von α₀ bis α₁ und von α₂ bis α₃ der Fall 1 gegeben und zwischen α₁ und α₂ der Fall 2.

### Bezugszeichen

- 10: Schiff
- 20: erstes Anemometer
- 30: zweites Anemometer
- 40: Aufbau
- 50: Längsrichtung des Schiffs
- 100: erste Schwellwert,
- 110: erste erste Abweichungswert
- 120: zweite erste Abweichungswert

## Patentansprüche

1. Verfahren zur Ermittlung der Windrichtung an Bord eines Schiffes (10) mit wenigstens einem ersten Anemometer (20) und einem zweiten Anemometer (30), wobei genau zwei Anemometer (20, 30) verwendet werden, wobei das Schiff (10) eine Auswertevorrichtung aufweist, wobei die Auswertevorrichtung mit dem ersten Anemometer (20) und dem zweiten Anemometer (30) zur Übertragung der gemesseneren Windrichtung verbunden sind, wobei das Verfahren die folgenden Schritte aufweist:
a) Kontinuierliches Erfassen der Windrichtung und der Windgeschwindigkeit durch das erste Anemometer (20) und das zweite Anemometer (30) und Übertragung der ersten erfassten Windrichtung und der ersten erfassten Windgeschwindigkeit des ersten Anemometers (20) und der zweiten erfassten Windrichtung und der zweiten erfassten Windgeschwindigkeit des zweiten Anemometers (30) an die Auswertevorrichtung,
b) Bilden eines Mittelwertes der erfassten Windgeschwindigkeiten über einen ersten Zeitraum t₁ sowie Bilden eines Abweichungswertes für den Mittelwert,
c) Vergleich des Abweichungswertes mit einem ersten Schwellwert (100) zur Unterscheidung von zwei Fällen:
Fall 1: Abweichungswert liegt unter dem ersten Schwellwert (100),
Fall 2. Der Abweichungswert liegt über dem ersten Schwellwert (100),
d) Ermitteln der Windrichtung und/oder Windgeschwindigkeit aus der ersten erfassten Windrichtung und/oder der ersten erfassten Windgeschwindigkeit und der zweiten erfassten Windrichtung und /oder der zweiten erfassten Windgeschwindigkeit und weiteres Vorgehen nach einem der beiden Fälle: Fall 1: durch Verwenden der ersten erfassten Windrichtung und/oder der ersten erfassten Windgeschwindigkeit und der zweiten erfassten Windrichtung, und/oder der zweiten erfassten Windgeschwindigkeit Fall 2: Verwenden der erfassten Windrichtung und/oder der erfassten Windgeschwindigkeit des Anemometers (20, 30), dessen Abweichungswert (110, 120) den ersten Schwellwert (100) unterschreitet, wobei
der Mittelwert in Schritt b) als ein gemeinsamer Mittelwert über die ersten erfassten Windgeschwindigkeiten und die zweiten erfassten Windgeschwindigkeiten gebildet wird und der Abweichungswert in Schritt b) als ein gemeinsamer Abweichungswert der ersten erfassten Windgeschwindigkeiten und der zweiten erfassten Windgeschwindigkeiten gegenüber dem gemeinsamen Mittelwert gebildet wird,
wobei in Schritt c) folgende Schritt durchgeführt werden:
Vergleich des gemeinsamen Abweichungswertes mit einem ersten Schwellwert zur Unterscheidung von zwei Fällen:
Fall 1: der gemeinsame Abweichungswert liegt unter dem ersten Schwellwert, Fall 2. der gemeinsame Abweichungswert liegt über dem ersten Schwellwert, wobei
in Schritt b) das Bilden eines ersten ersten Mittelwertes der ersten erfassten Windgeschwindigkeiten über einen ersten Zeitraum t₁ sowie Bilden eines ersten ersten Abweichungswertes (110) für den ersten ersten Mittelwert sowie das Bilden eines zweiten ersten Mittelwertes der zweiten erfassten Windgeschwindigkeiten über einen ersten Zeitraum t₁ sowie Bilden eines zweiten ersten Abweichungswertes (120) für den zweiten ersten Mittelwert erfolgt, wobei in Schritt c) folgende Schritt durchgeführt werden:
Vergleich des ersten ersten Abweichungswertes und des zweiten ersten Abweichungswertes mit einem ersten Schwellwert zur Unterscheidung von zwei Fällen:
Fall 1: der erste erste Abweichungswert und der zweite erste Abweichungswert liegen unter dem ersten Schwellwert,
Fall 2. Einer der beiden ersten Abweichungswerte liegt unter dem ersten Schwellwert, der andere der beiden ersten Abweichungswerte liegt über dem ersten Schwellwert, und
zusätzliche Ermittlung der Windgeschwindigkeit, wobei das Verfahren zusätzlich die folgenden Schritte aufweist:
A) Bilden eines ersten zweiten Mittelwertes der ersten erfassten Windgeschwindigkeiten über einen zweiten Zeitraum t₂ sowie Bilden eines ersten zweiten Abweichungswertes für den ersten zweiten Mittelwert sowie Bilden eines zweiten zweiten Mittelwertes der zweiten erfassten Windgeschwindigkeiten über einen zweiten Zeitraum t₂ sowie Bilden eines zweiten zweiten Abweichungswertes für den zweiten Mittelwert,
B) Vergleichen des ersten zweiten Abweichungswertes und des zweiten zweiten Abweichungswertes miteinander zur Unterscheidung von zwei Fällen:
Fall I: Einer der zweiten Abweichungswerte ist um wenigstens Faktor 10 größer als der andere zweite Abweichungswert,
Fall II: Keiner der zweiten Abweichungswerte ist wenigstens Faktor 10 größer als der andere zweite Abweichung,
C) Ermitteln der Windgeschwindigkeit:
Fall I: Verwenden der erfassten Windgeschwindigkeiten nur des Anemometers (20, 30), welches den geringeren zweiten Abweichungswert aufweist,
Fall II: Verwenden der erfassten Windgeschwindigkeiten beider Anemometer (20, 30).

2. Verfahren nach Anspruch 1, **dadurch gekennzeichnet, dass** der Mittelwert in Schritt b) als ein gemeinsamer Mittelwert über die ersten erfassten Windgeschwindigkeiten und die zweiten erfassten Windgeschwindigkeiten gebildet wird und Schritt b) ein erster dritter Abweichungswert der ersten erfassten Windgeschwindigkeiten gegenüber dem gemeinsamen Mittelwert und ein zweiter dritter Abweichungswert der zweiten erfassten Windgeschwindigkeiten gegenüber dem gemeinsamen Mittelwert gebildet wird,
wobei in Schritt c) folgende Schritt durchgeführt werden:
Vergleich des ersten dritten Abweichungswertes und des zweiten dritten Abweichungswertes mit einem ersten Schwellwert zur Unterscheidung von zwei Fällen:
Fall 1: der erste dritte Abweichungswert und der zweite dritte Abweichungswert liegen unter dem ersten Schwellwert,
Fall 2. Einer der beiden dritten Abweichungswerte liegt unter dem ersten Schwellwert, der andere der beiden dritten Abweichungswerte liegt über dem ersten Schwellwert.

3. Verfahren nach einem der vorstehenden Ansprüche, **dadurch gekennzeichnet, dass** der ersten Zeitraum t₁ zwischen 1 und 10 s, bevorzugt zwischen 2 und 5 s, gewählt wird.

4. Verfahren nach einem der vorstehenden Ansprüche, **dadurch gekennzeichnet, dass** das kontinuierliche Erfassen mit einer Zeitauflösung von 0,1 ms bis 1000 ms, bevorzugt zwischen 100 ms und 500 ms, erfolgt.

5. Verfahren nach einem der vorstehenden Ansprüche, **dadurch gekennzeichnet, dass** der erste Schwellwert (100) auf 10 m²/s² festgelegt wird.

6. Verfahren nach einem der vorstehenden Ansprüche, **dadurch gekennzeichnet, dass** als erster Abweichungswert (110, 120) die Varianz verwendet wird.

7. Verfahren nach nach einem der vorstehenden Ansprüche, **dadurch gekennzeichnet, dass** der zweite Zeitraum t₂ zwischen 10 und 120 s, bevorzugt zwischen 20 und 50 s, gewählt wird.

8. Verfahren nach einem der vorstehenden Ansprüche, **dadurch gekennzeichnet, dass** in Schritt C) im Fall II die Windgeschwindigkeit durch Mittelung der beiden erfassten Windgeschwindigkeiten ermittelt wird.

9. Verfahren nach einem der vorstehenden Ansprüche, **dadurch gekennzeichnet, dass** in Schritt C) im Fall I die Windgeschwindigkeit aus der erfassten Windgeschwindigkeit des Anemometers (20, 30) mit der geringeren zweiten Abweichung durch Anpassung mittels einer Korrekturfunktion ermittelt wird.

10. Verfahren nach Anspruch 9, **dadurch gekennzeichnet, dass** die Korrekturfunktion mittels Simulation für das Schiff (10) bei unterschiedlichen Windgeschwindigkeiten und Anströmwinkeln ermittelt wird.

11. Verfahren nach Anspruch 9, **dadurch gekennzeichnet, dass** die Korrekturfunktion durch Fahren von Drehkreisen ermittelt wird.

12. Auswertevorrichtung, wobei die Auswertevorrichtung ausgebildet ist zur Durchführung des Verfahren nach einem der vorstehenden Ansprüche.

13. Schiff (10) mit einer Auswertevorrichtung nach Anspruch 12 und wenigstens einem ersten Anemometer (20) und einem zweiten Anemometer (30), wobei das Schiff (10) ausgebildet ist zur Durchführung des Verfahren nach einem der Ansprüche 1 bis 11.

14. Computerprogrammprodukt umfassend Befehle, die bei der Ausführung des Programms durch einen Computer diesen veranlassen, das Verfahren nach einem der Ansprüche 1 bis 11 auszuführen.

## Claims

1. Method for determining the wind direction on board a ship (10) with at least a first anemometer (20) and a second anemometer (30), wherein exactly two anemometers (20, 30) are used, wherein the ship (10) has an evaluation device, wherein the evaluation device is connected to the first anemometer (20) and the second anemometer (30) for transmission of the measured wind direction, wherein the method has the following steps:
a) Continuous detection of the wind direction and the wind speed by the first anemometer (20) and the second anemometer (30) and transmission of the first detected wind direction and the first detected wind speed of the first anemometer (20) and the second detected wind direction and the second detected wind speed of the second anemometer (30) to the evaluation device,
b) Forming an average value of the detected wind speeds over a first period t1 as well as forming a deviation value for the average value,
c) Comparing the deviation value with a first threshold value (100) for distinguishing between two cases:
Case 1: deviation value lies below the first threshold value (100),
Case 2. The deviation value lies above the first threshold value (100),
d) Determining the wind direction and/or wind speed from the first detected wind direction and/or the first detected wind speed and the second detected wind direction and/or the second detected wind speed and further procedure according to one of the two cases:
Case 1: by using the first detected wind direction and/or the first detected wind speed and the second detected wind direction, and/or the second detected wind speed
Case 2: using the detected wind direction and/or the detected wind speed of the anemometer (20, 30) whose deviation value (110, 120) falls below the first threshold value (100), wherein
the average value in step b) is formed as a common average value over the first detected wind speeds and the second detected wind speeds and the deviation value in step b) is formed as a common deviation value of the first detected wind speeds and the second detected wind speeds relative to the common average value,
wherein in step c) the following step is carried out:
Comparing the common deviation value with a first threshold value for distinguishing between two cases:
Case 1: the common deviation value lies below the first threshold value,
Case 2. the common deviation value lies above the first threshold value, wherein in step b) the forming of a first first average value of the first detected wind speeds over a first period t1 as well as forming a first first deviation value (110) for the first first average value as well as the forming of a second first average value of the second detected wind speeds over a first period t1 as well as forming a second first deviation value (120) for the second first average value takes place, wherein in step c) the following step is carried out:
Comparing the first first deviation value and the second first deviation value with a first threshold value for distinguishing between two cases:
Case 1: the first first deviation value and the second first deviation value lie below the first threshold value,
Case 2. One of the two first deviation values lies below the first threshold value, the other of the two first deviation values lies above the first threshold value, wherein
additional determination of the wind speed, wherein the method additionally has the following steps:
A) Forming a first second average value of the first detected wind speeds over a second period t2 as well as forming a first second deviation value for the first second average value as well as
forming a second second average value of the second detected wind speeds over a second period t2 as well as forming a second second deviation value for the second average value,
B) Comparing the first second deviation value and the second second deviation value with one another for distinguishing between two cases:
Case I: One of the second deviation values is at least factor 10 greater than the other second deviation value,
Case II: None of the second deviation values is at least factor 10 greater than the other second deviation,
C) Determining the wind speed:
Case I: Using the detected wind speeds only of the anemometer (20, 30) which has the lower second deviation value,
Case II: Using the detected wind speeds of both anemometers (20, 30).

2. Method according to claim 1, **characterized in that** the average value in step b) is formed as a common average value over the first detected wind speeds and the second detected wind speeds and in step b) a first third deviation value of the first detected wind speeds relative to the common average value and a second third deviation value of the second detected wind speeds relative to the common average value is formed,
wherein in step c) the following step is carried out:
Comparing the first third deviation value and the second third deviation value with a first threshold value for distinguishing between two cases:
Case 1: the first third deviation value and the second third deviation value lie below the first threshold value,
Case 2. One of the two third deviation values lies below the first threshold value, the other of the two third deviation values lies above the first threshold value.

3. Method according to one of the preceding claims, **characterized in that** the first period t1 is selected between 1 and 10 s, preferably between 2 and 5 s.

4. Method according to one of the preceding claims, **characterized in that** the continuous detection takes place with a time resolution of 0.1 ms to 1000 ms, preferably between 100 ms and 500 ms.

5. Method according to one of the preceding claims, **characterized in that** the first threshold value (100) is fixed at 10 m2/s2.

6. Method according to one of the preceding claims, **characterized in that** the variance is used as the first deviation value (110, 120).

7. Method according to one of the preceding claims, **characterized in that** the second period t2 is selected between 10 and 120 s, preferably between 20 and 50 s.

8. Method according to one of the preceding claims, **characterized in that** in step C) in case II the wind speed is determined by averaging the two detected wind speeds.

9. Method according to one of the preceding claims, **characterized in that** in step C) in case I the wind speed is determined from the detected wind speed of the anemometer (20, 30) with the lower second deviation by adaptation by means of a correction function.

10. Method according to claim 9, **characterized in that** the correction function is determined by means of simulation for the ship (10) at different wind speeds and flow angles.

11. Method according to claim 9, **characterized in that** the correction function is determined by driving turning circles.

12. Evaluation device, wherein the evaluation device is configured for carrying out the method according to one of the preceding claims.

13. Ship (10) with an evaluation device according to claim 12 and at least a first anemometer (20) and a second anemometer (30), wherein the ship (10) is configured for carrying out the method according to one of claims 1 to 11.

14. Computer program product comprising commands which, when the program is executed by a computer, cause the computer to carry out the method according to one of claims 1 to 11.

## Revendications

1. Procédé pour déterminer la direction du vent à bord d'un navire (10) avec au moins un premier anémomètre (20) et un second anémomètre (30), dans lequel exactement deux anémomètres (20, 30) sont utilisés, dans lequel le navire (10) possède un dispositif d'évaluation, dans lequel le dispositif d'évaluation est relié au premier anémomètre (20) et au second anémomètre (30) pour la transmission de la direction du vent mesurée, dans lequel le procédé comporte les étapes suivantes :
a) Détection continue de la direction du vent et de la vitesse du vent par le premier anémomètre (20) et le second anémomètre (30) et transmission de la première direction du vent détectée et de la première vitesse du vent détectée du premier anémomètre (20) et de la seconde direction du vent détectée et de la seconde vitesse du vent détectée du second anémomètre (30) au dispositif d'évaluation,
b) Formation d'une valeur moyenne des vitesses du vent détectées sur une première période t1 ainsi que formation d'une valeur d'écart pour la valeur moyenne,
c) Comparaison de la valeur d'écart avec une première valeur seuil (100) pour distinguer entre deux cas :
Cas 1 : la valeur d'écart est inférieure à la première valeur seuil (100),
Cas 2. La valeur d'écart est supérieure à la première valeur seuil (100),
d) Détermination de la direction du vent et/ou de la vitesse du vent à partir de la première direction du vent détectée et/ou de la première vitesse du vent détectée et de la seconde direction du vent détectée et/ou de la seconde vitesse du vent détectée et procédure supplémentaire selon l'un des deux cas :
Cas 1 : en utilisant la première direction du vent détectée et/ou la première vitesse du vent détectée et la seconde direction du vent détectée, et/ou la seconde vitesse du vent détectée
Cas 2 : en utilisant la direction du vent détectée et/ou la vitesse du vent détectée de l'anémomètre (20, 30) dont la valeur d'écart (110, 120) est inférieure à la première valeur seuil (100), dans lequel
la valeur moyenne à l'étape b) est formée comme une valeur moyenne commune sur les premières vitesses du vent détectées et les secondes vitesses du vent détectées et la valeur d'écart à l'étape b) est formée comme une valeur d'écart commune des premières vitesses du vent détectées et des secondes vitesses du vent détectées par rapport à la valeur moyenne commune,
dans lequel à l'étape c) l'étape suivante est exécutée :
Comparaison de la valeur d'écart commune avec une première valeur seuil pour distinguer entre deux cas :
Cas 1 : la valeur d'écart commune est inférieure à la première valeur seuil,
Cas 2. la valeur d'écart commune est supérieure à la première valeur seuil, dans lequel
à l'étape b) ont lieu la formation d'une première première valeur moyenne des premières vitesses du vent détectées sur une première période t1 ainsi que la formation d'une première première valeur d'écart (110) pour la première première valeur moyenne ainsi que la formation d'une seconde première valeur moyenne des secondes vitesses du vent détectées sur une première période t1 ainsi que la formation d'une seconde première valeur d'écart (120) pour la seconde première valeur moyenne,
dans lequel à l'étape c) l'étape suivante est exécutée :
Comparaison de la première première valeur d'écart et de la seconde première valeur d'écart avec une première valeur seuil pour distinguer entre deux cas :
Cas 1 : la première première valeur d'écart et la seconde première valeur d'écart sont inférieures à la première valeur seuil,
Cas 2. L'une des deux premières valeurs d'écart est inférieure à la première valeur seuil, l'autre des deux premières valeurs d'écart est supérieure à la première valeur seuil, dans lequel
détermination supplémentaire de la vitesse du vent, dans lequel le procédé comporte en outre les étapes suivantes :
A) Formation d'une première seconde valeur moyenne des premières vitesses du vent détectées sur une seconde période t2 ainsi que formation d'une première seconde valeur d'écart pour la première seconde valeur moyenne ainsi que formation d'une seconde seconde valeur moyenne des secondes vitesses du vent détectées sur une seconde période t2 ainsi que formation d'une seconde seconde valeur d'écart pour la seconde valeur moyenne,
B) Comparaison de la première seconde valeur d'écart et de la seconde seconde valeur d'écart l'une avec l'autre pour distinguer entre deux cas :
Cas I : L'une des secondes valeurs d'écart est au moins d'un facteur 10 supérieure à l'autre seconde valeur d'écart,
Cas II : Aucune des secondes valeurs d'écart n'est au moins d'un facteur 10 supérieure à l'autre seconde valeur d'écart,
C) Détermination de la vitesse du vent :
Cas I : Utilisation des vitesses du vent détectées uniquement de l'anémomètre (20, 30) qui possède la seconde valeur d'écart la plus faible,
Cas II : Utilisation des vitesses du vent détectées des deux anémomètres (20, 30).

2. Procédé selon la revendication 1, **caractérisé en ce que** la valeur moyenne à l'étape b) est formée comme une valeur moyenne commune sur les premières vitesses du vent détectées et les secondes vitesses du vent détectées et à l'étape b) une première troisième valeur d'écart des premières vitesses du vent détectées par rapport à la valeur moyenne commune et une seconde troisième valeur d'écart des secondes vitesses du vent détectées par rapport à la valeur moyenne commune est formée,
dans lequel à l'étape c) l'étape suivante est exécutée :
Comparaison de la première troisième valeur d'écart et de la seconde troisième aleur d'écart avec une première valeur seuil pour distinguer entre deux cas :
Cas 1 : la première troisième valeur d'écart et la seconde troisième valeur d'écart sont inférieures à la première valeur seuil,
Cas 2. L'une des deux troisièmes valeurs d'écart est inférieure à la première valeur seuil, l'autre des deux troisièmes valeurs d'écart est supérieure à la première valeur seuil.

3. Procédé selon l'une des revendications précédentes, **caractérisé en ce que** la première période t1 est choisie entre 1 et 10 s, de préférence entre 2 et 5 s.

4. Procédé selon l'une des revendications précédentes, **caractérisé en ce que** la détection continue a lieu avec une résolution temporelle de 0,1 ms à 1000 ms, de préférence entre 100 ms et 500 ms.

5. Procédé selon l'une des revendications précédentes, **caractérisé en ce que** la première valeur seuil (100) est fixée à 10 m2/s2.

6. Procédé selon l'une des revendications précédentes, **caractérisé en ce que** la variance est utilisée comme première valeur d'écart (110, 120).

7. Procédé selon l'une des revendications précédentes, **caractérisé en ce que** la seconde période t2 est choisie entre 10 et 120 s, de préférence entre 20 et 50 s.

8. Procédé selon l'une des revendications précédentes, **caractérisé en ce qu'**à l'étape C) dans le cas Il la vitesse du vent est déterminée par moyennage des deux vitesses du vent détectées.

9. Procédé selon l'une des revendications précédentes, **caractérisé en ce qu'**à l'étape C) dans le cas I la vitesse du vent est déterminée à partir de la vitesse du vent détectée de l'anémomètre (20, 30) ayant la seconde valeur d'écart la plus faible par adaptation au moyen d'une fonction de correction.

10. Procédé selon la revendication 9, **caractérisé en ce que** la fonction de correction est déterminée au moyen d'une simulation pour le navire (10) à différentes vitesses du vent et angles d'écoulement.

11. Procédé selon la revendication 9, **caractérisé en ce que** la fonction de correction est déterminée par la conduite de cercles de giration.

12. Dispositif d'évaluation, dans lequel le dispositif d'évaluation est configuré pour exécuter le procédé selon l'une des revendications précédentes.

13. Navire (10) avec un dispositif d'évaluation selon la revendication 12 et au moins un premier anémomètre (20) et un second anémomètre (30), dans lequel le navire (10) est configuré pour exécuter le procédé selon l'une des revendications 1 à 11.

14. Produit programme informatique comprenant des instructions qui, lorsque le programme est exécuté par un ordinateur, amènent l'ordinateur à exécuter le procédé selon l'une des revendications 1 à 11.
